# EUROPÄISCHE PATENTSCHRIFT

(11) **EP 0 775 181 B1**
(45) Veröffentlichungstag und Bekanntmachung des Hinweises auf die Patenterteilung: **14.07.1999**
(21) Anmeldenummer: 95929048.7
(22) Anmeldetag: 01.08.1995
(51) Int. Cl.: C09K 17/20, C09K 17/22, C09K 17/14

(54) **VERWENDUNG AUSGEWÄHLTER UND BIOLOGISCH VERTRÄGLICHER STABILISATOREN IN POLYVINYLESTER-BASIERTEN IMPRÄGNIERMITTELN ZUR ERDREICHVERFESTIGUNG**
USE OF SELECTED AND BIOLOGICALLY ADMISSIBLE STABILISERS IN POLYVINYL ESTER-BASED IMPREGNATING AGENTS FOR CONSOLIDATING THE GROUND
UTILISATION DE STABILISATEURS SELECTIONNES BIOLOGIQUEMENT ADMISSIBLES DANS DES AGENTS D'IMPREGNATION A BASE D'ESTERS DE POLYVINYLE AFIN DE CONSOLIDER LE SOL

(30) Priorität: 10.08.1994 DE 4428269
(43) Veröffentlichungstag der Anmeldung: 28.05.1997
(73) Patentinhaber: Henkel Kommanditgesellschaft auf Aktien, 40191 Düsseldorf (DE)
(72) Erfinder: RITTER, Wolfgang, D-42781 Haan (DE); VON TAPAVICZA, Stephan, D-40699 Erkrath (DE); HÖLTGEN, Christiane, D-40599 Düsseldorf (DE)
(86) Internationale Anmeldenummer: EP9503066
(87) Internationale Veröffentlichungsnummer: WO9605268

(56) Entgegenhaltungen:
- DE-A- 4 324 474
- GB-A- 906 470
- US-A- 3 887 506
- US-A- 4 072 020
- DATABASE WPI Derwent Publications Ltd., London, GB; AN 82-06810e & JP,A,56 161 462 (KURARAY K.K)
- DATABASE WPI Derwent Publications Ltd., London, GB; AN 77-33585y & JP,A,52 040 540 (NIPPON SYNTH.CHEM.)

## Beschreibung

Die erfindungsgemäße Lehre betrifft eine Verbesserung und Erweiterung der in der älteren deutschen Patentanmeldung P 43 24 474.2 geschilderten Lehre zur Oberflächenverfestigung von Sand und/oder Erdreich - im nachfolgenden auch als Erdreich bezeichnet. Beschrieben ist in dieser älteren Anmeldung eine Modifikation des an sich bekannten Verfahrens, durch Auftrag und Eintrag von wäßrigen Polymerdispersionen auf beziehungsweise in die Erdreichoberflächenschichten eine wenigstens temporäre Verfestigung auszubilden. Das Wasser des eingetragenen Imprägniermittels trocknet in vergleichsweise kurzer Zeit auf, die zurückbleibende Polymerphase verfestigt die beispielsweise körnige Struktur des imprägnierten Erdreichs, ohne dabei die Wasserdurchlässigkeit dieser Schichten in unzumutbarer Weise zu beeinträchtigen. Eine solche Oberflächenverfestigung beschränkt sich nicht auf Erdreich im engeren Sinne. Auch die entsprechende Stabilisierung von anderen Oberflächenbereichen, die beispielsweise gegen Winderrosion geschützt werden müssen, fällt in die Lehre des erfindungsgemäBen Handelns. Als Beispiele seien hier benannt: Deponien und/oder Abraumhalden mit oder ohne Auftrag einer Abdeckung durch Mutterboden oder andere Schutzschichten.

Entwicklung und Praxis beschäftigen sich seit Jahrzehnten mit der auch der Erfindung zugrundeliegenden Konzeption, partikuläre Feststoffe miteinander verklebende synthetische Kunststoffe in Form ihrer wäßrigen Dispersionen beziehungsweise Emulsionen auf die zu verfestigenden Flächen aufzutragen und dort aufzutrocknen. Besondere praktische Bedeutung kommt in diesem Zusammenhang wäßrigen Polyvinylacetat-Dispersionen zu - im nachfolgenden auch als PVAc-Dispersionen bezeichnet. Beispielhaft sei auf die folgenden Veröffentlichungen verwiesen: A. Kullmann et al. in Arch. Acker-Pflanzenbau Bodenkd., 22(11), 713-19. Neben Polyvinylacetat werden als brauchbare Binder beschrieben: Butadien-Styrol-Latex, ein Harnstoff/Formaldehyd-Polymer und eine Bitumenemulsion. Die Stabilisierung von Dünensand in entsprechender Weise gegen Regenbewitterung ist Gegenstand der Veröffentlichung D. Gabriels et al. (Univ. Ghent, Belgien) in Soil Sci., 118(5), 332-8. Auch hier ist ein Bindersystem auf Polyvinylacetatbasis unter den bevorzugten Arbeitsmitteln angegeben. Aus den weiteren weltweit durchgeführten Arbeiten sei lediglich beispielhaft auf einige Patentschriften verwiesen, siehe in diesem Zusammenhang US 4,072,020, US 3,887,506, HU 11 654 sowie ZA 7501787.

Der Anforderungs- beziehungsweise Aufgabenkatalog für eine solche Verfestigung der Erdreichoberfläche kann auBerordentlich vielgestaltig sein. Ohne Anspruch auf Vollständigkeit sei eine Reihe der in der Praxis geforderten Eigenschaften aufgezählt: Das Material sollte widerstandsfähig wenigstens gegen Fußgängerverkehr sein, es darf durch die jeweils vorliegenden Temperaturen, die Luftfeuchtigkeit und den Regen - für den jeweils beabsichtigten Zeitraum - nicht beeinträchtigt werden, es muß auch gegenüber hohen Windgeschwindigkeiten widerstandsfähig sein. Das aufzutragende Material sollte nicht entflammbar sein und bei Lagerung sowie während und nach der Anwendung keine Feuergefahr oder Explosionsgefahr darstellen. Bei Transport und Verarbeitung sollten möglichst keine auBergewöhnlichen Schutzmaßnahmen getroffen oder Schutzkleidung getragen werden müssen. Die ausgehärtete Kunststoffimprägnierung sollte auf keimende Pflanzen, auf wachsende Pflanzen und auf Tiere keine giftige Wirkung ausüben und dabei möglichst farblos oder transparent sein. Unter Berücksichtigung dieser und weiterer Anforderungen kann zum heutigen Wissensstand zusammengefaßt werden:
1. PVAc-Homopolymer-Dispersionen sind grundsätzlich als Bindemittel geeignet. Ohne Mitverwendung von Weichmachern ergeben sie allerdings einen derart spröden Zusammenhalt der imprägnierten Schichten des Erdreichs, daß wesentliche Gebrauchsanforderungen nicht erfüllt werden.
2. Durch Zusatz von unter Normalbedingungen fließfähigen Weichmachern kann der Mangel zu (1) aufgefangen werden. In der Praxis bewährt hat sich als Weichmacher insbesondere das Di-butylphtalat. Damit weichgemachte PVAc-Homopolymerisate ergeben einen festen Zusammenhalt, dieser Weichmacher ist allerdings nicht abbaubar.
3. Innerlich weichgemachte Polymer-Dispersionen (Poly-vinylacetat-co-Dibutylmaleinat) ergeben einen festen Zusammenhalt, sind aber ebenfalls nicht abbaubar.

Die Lehre der eingangs zitierten älteren deutschen Patentanmeldung P 43 24 474.2 geht von der Aufgabe aus, PVAc-Homopolymer-Dispersionen für den beschriebenen Einsatzzweck mit Weichmachern auszurüsten, die einerseits das vielgestaltige technische Anforderungsprofil erfüllen, zum anderen aber darüber hinaus bioverträglich sind und insbesondere ihrerseits abgebaut werden können. Zugrunde liegt hier das Fachwissen, daß PVAc-Homopolymere grundsätzlich bioverträglich und abbaubar sind, wenn auch der Abbau dieses Polymeren vergleichsweise langsam vor sich geht. Zur einschlägigen Literatur siehe beispielsweise H. Kastien et al. "Der quantitative mikrobiologische Abbau von Lackkunstharzen und Polymerdispersionen", farbe + lack, 98. Jahrgang, 7/1992, 505-8. Gemäß der Lehre der älteren Anmeldung werden als biologisch akzeptable Weichmacher für PVAc-Dispersionen die folgenden ausgewählten Stoffklassen eingesetzt: Triester des Glycerins mit niederen aliphatischen Monocarbonsäuren, Citronensäuretriester mit niederen aliphatischen monofunktionellen Alkoholen und/oder epoxidierte Triglyceride wenigstens anteilsweise olefinisch ungesättigter Fettsäuren.

Zu Einzelheiten der technischen Lehre gemäß der älteren Anmeldung P 43 24 474 wird auf deren Offenbarung verwiesen, die hiermit gleichzeitig auch zum Gegenstand der vorliegenden Erfindungsoffenbarung gemacht wird.

Unter Einsatz der in der genannten älteren Anmeldung beschriebenen Imprägnier- bzw. Verfestigungsmittel gelingt es, im Oberflächenbereich des behandelten Bodens - beispielsweise bis zu Schichtdicken im Bereich von einigen Zentimeter - optimierte Verfestigungen einzustellen, die unter Normalbedingungen dem in der Praxis gestellten Anforderungsprofil genügen. Weitere Untersuchungen haben allerdings gezeigt, daß die so befestigten Erdreichoberflächen bei feuchten Untergründen/Böden oder bei intensivem Feuchtigkeitskontakt zum Beispiel durch starken Regen stark aufweichen können. Die Verfestigung kehrt zwar in der Regel nach erneutem Trocknen wieder zurück und verschwindet damit nicht vollständig, gleichwohl liegt hier für die praktische Anwendung eine Schwäche. Die Beseitigung dieser Schwäche ist Gegenstand der Lehre der vorliegenden Erfindung. Beschrieben werden dementsprechend im nachfolgenden Beschichtungs- bzw. Imprägniermassen für Erde bzw. Sand, die sowohl bei trockenem als auch bei nassem Untergrund eine deutliche Verfestigung ergeben und diese Festigkeit sowohl in trockenem als auch in feuchtem oder nassem Zustand beibehalten. Die biologische Abbaubarkeit und Bodenverträglichkeit dieser Beschichtung bleibt gleichwohl erhalten.

### Gegenstand der Erfindung

Kern der erfindungsgemäßen Lehre ist damit die Verwendung von wenigstens anteilsweise olefinisch 1- und/oder mehrfach ungesättigten Fettsäuren, Fettalkoholen und/oder ihren wenigstens weitgehend wasserunlöslichen Estern, Ethern und/oder Salzen als abbaubare und biologisch verträgliche Stabilisatoren zur Erhöhung der Wasserfestigkeit von Erdreichimprägnierungen auf Basis von Polyvinylacetat und vergleichbaren Estern des Polyvinylalkohols mit niederen Monocarbonsäuren.

### Einzelheiten zur erfindungsgemäßen Lehre

Die Erfindung sieht damit die folgende Modifikation der geschilderten Arbeitsmittel vor: Als zusätzliche Komponente werden in die zu befestigenden Bodenschichten biologisch verträgliche und durch natürliche Abbauprozesse abbaubare Hilfsstoffe eingetragen, die aufgrund ihrer wenigstens überwiegend oleophilen Molekülstruktur die Wasserfestigkeit der Imprägniermasse auch unter Extrembedingungen deutlich erhöhen können. Gleichwohl sind diese Hilfsmittel der erfindungsgemäßen Lehre natürlichen Abbauprozessen zugänglich. Ihre Molekülstruktur zeichnet sich neben dem überwiegenden oleophilen Rest durch das Vorliegen von funktionellen Gruppen aus - Hydroxylgruppen, Carboxylgruppen, Ether- und/oder Estergruppierungen - die als Ansatzpunkte für den erleichterten mikrobiologischen Abbau solcher Stoffe bzw. Stoffklassen bekannt sind. Die in der Praxis auftretenden Abbaugeschwindigkeiten dieser erfindungsgemäß mitverwendeten Hilfsstoffe sind dabei in der Regel so beschaffen, daß der angestrebte Schutz der Imprägniermasse gegen im Übermaß zutretendes Wasser für die hier in der Praxis benötigten Zeiträume sichergestellt werden kann. Das im einzelnen in der genannten älteren Anmeldung beschriebene Arbeitsprinzip der temporären Erdreichbefestigung sieht ja bekanntlich die gleichzeitige Besamung der zu verfestigenden Erdreichschichten mit geeigneten Pflanzensamen und die damit gegebene zunehmende Erdreichverfestigung durch natürlichen Pflanzenwuchs in dem Ausmaß vor, in dem die temporäre Verfestigung durch Harzmassen im Sinne der erfindungsgemäßen Lehre durch insbesondere bakterielle Abbauprozesse im Boden verschwindet.

Im nachfolgenden wird zunächst auf die chemische Struktur geeigneter und besonders bevorzugter Unterklassen der erfindungsgemäßen Stabilisatoren eingegangen. Anschließend werden dann die bevorzugten Gesetzmäßigkeiten zum Eintrag bzw. zur Mitverwendung dieser Stabilisatoren in die Imprägniermassen bzw. in die zu bindenden Erdreichschichten geschildert.

Der Begriff der Fettsäuren bzw. Fettalkohole erfaßt in der Fachsprache bekanntlich entsprechende Stoffe bzw. Stoffgemische, die sich jeweils durch eine hinreichend lange Kohlenwasserstoffkette im Molekül auszeichnen. Hierdurch wird der überwiegend oleophile Charakter trotz des Vorliegens der hydrophilen funktionellen Gruppen sichergestellt. Fettsäuren und Fettalkohole im Sinne der erfindungsgemäßen Definition zeichnen sich dementsprechend durch Kohlenwasserstoffketten im Molekül mit wenigstens 6, vorzugsweise mit wenigstens 8 bis 10 C-Atomen aus. Die obere Grenze für die Kohlenstoffzahl im Molekül liegt im allgemeinen bei etwa 30 C-Atomen, ist hier allerdings grundsätzlich nicht bindend. Fettsäuren natürlichen und/oder synthetischen Ursprungs - sowie die entsprechenden Fettalkohole - stellen in aller Regel Stoffgemische dar, die im Mittel im Molekül 10 bis 24 C-Atome und insbesondere etwa 12 bis 22 C-Atome aufweisen. Auf die der Fachwelt zugängliche einschlägige Literatur wird verwiesen.

Zwei weitere Elemente der Molekülstruktur der hier betroffenen Stoffklassen werden zur Charakterisierung herangezogen: Fettorganische Verbindungen der hier betroffenen Art sind 1- und/oder mehrfach olefinisch ungesättigt. Insbesondere zahlreiche Vertreter natürlichen Ursprungs zeichnen sich durch das Vorliegen mehr oder weniger großer Mengen an solchen 1- und/oder mehrfach olefinisch ungesättigten Carbonsäuren des angegebenen C-Zahlbereichs aus, aber auch die heute üblichen Syntheseverfahren liefern gewünschtenfalls ungesättigte Vertreter der hier betroffenen Stoffklassen.

Das zweite wichtige Charakteristikum ist die Kettenstruktur des jeweiligen Moleküls. Naturstoffbasierte Fettsäuren und daraus abgeleitete Fettalkohole sind wenigstens weitaus überwiegend durch ihre lineare Molekülstruktur gekennzeichnet. Insbesondere die synthetische Chemie kennt entsprechende Vertreter mit mehr oder weniger stark ausgeprägter Kettenverzweigung. Bekannt sind schließlich die Abhängigkeiten sowohl der Rheologie als auch des biologischen Abbauverhaltens von den hier angegebenen Strukturparametern der Komponenten mit Fettcharakter. Bezüglich der Rheologie führen sowohl olefinische Doppelbindungen im Molekül wie die Kettenverzweigung zur Absenkung der Schmelzpunkte. Die biologische Abbaubarkeit ist am besten gewährleistet bei den geradkettigen Vertretern der hier betroffenen Fettkomponenten, wobei entsprechende Vertreter mit geradzahliger Anzahl von Kohlenstoffatomen - wie sie in den naturstoffbasierten Komponenten vorliegen - besonders leicht abbaubar sind. Aber auch beschränkte Kettenverzweigungen mit insbesondere isoliert auftretenden Methyl-Substituenten sind durch biologische Abbauprozesse noch wirkungsvoll abzubauen.

Die im Rahmen des erfindungsgemäßen Handelns angestrebten und tatsächlich eintretenden Abbauprozesse sind insbesondere entsprechende aerob ablaufende Mechanismen. Es ist bekanntes Fachwissen, daß unter diesen Bedingungen nicht nur Fettsäuren, Fettalkohole und entsprechende Komponenten mit Estergruppierungen dem bakteriologischen Angriff unterliegen, auch entsprechende Ether werden unter aeroben Bedingungen - wenn auch in der Regel zeitverzögert - abgebaut.

Bewußt ist in der Erfindungsschilderung auf diese der Fachwelt an sich bekannten Sachverhalte eingegangen. Für die Lehre der Erfindung leitet sich unter Berücksichtigung des allgemeinen Fachwissens daraus die Möglichkeit ab, durch Auswahl bestimmter Molekülstrukturen der erfindungsgemäß eingesetzten Stabilisatoren Einfluß zu nehmen auf den zum bakteriologischen Abbau benötigten Zeitraum dieser Stabilisatoren. Mittelbar erschließt sich damit die Möglichkeit der Regulierung des Zeitraumes, innerhalb dessen die feuchtigkeitsabweisenden hydrophoben Eigenschaften des Stabilisators hinreichend stark ausgeprägt sind, um den angestrebten Schutz der Imprägniermasse im Boden sicherzustellen.

Grundsätzlich eignen sich alle Vertreter der hier angesprochenen Klasse von Stabilisatoren auf Basis von Fettalkoholen, Fettsäuren, deren Ester und/oder Ether sowie der Fettsäuresalze. Die jeweilige Auswahl konkreter Vertreter und deren Applikationsform wird durch die jeweils vorgegebenen Bedingungen und im Einzelfall geforderten Anforderungen bestimmt. Fachmännisches Handeln schafft dabei die Möglichkeit, individuell ausgewählte Vertreter der angesprochenen Stabilisatorstoffklassen im breitestem Umfang der erfindungsgemäßen Verwendung zuzuführen.

Grundsätzlich gilt hier das Folgende: Bevorzugt ist es, jetzt auch diese Stabilisatoren in wäßriger Zubereitungsform einzusetzen und in dieser Form in das Erdreich einzutragen. Da die Stabilisatoren als solche im wesentlichen wasserunlöslich sind ist auch hier ihr Einsatz in Form wäßriger Emulsionen und/oder Dispersionen die geeignete technische Lösung. Die Stabilisatoren können dabei - wie nachstehend im einzelnen noch geschildert - sowohl in Abmischung mit den Imprägniermitteln auf PolyvinylacetatBasis und/oder auch getrennt hiervon zum Einsatz kommen. Die strukturabhängige Rheologie der hier betroffenen fettchemischen Stoffklassen, die Applikationsbedingungen für den praktischen Einsatz und die im Rahmen der Bodenimprägnierung gestellten Anforderungen an die Stabilisatoren im Sinne der erfindungsgemäßen Lehre geben die Möglichkeit, die jeweiligen individuellen Vertreter der erfindungsgemäß verwendeten Verbindungen einer Reihe von Untergruppen zuzuordnen. Ohne Anspruch auf Vollständigkeit gilt hier:

Es ist im allgemeinen erwünscht, daß die in wäßriger Emulsions- bzw. Dispersionsform aufgetragenen Stabilisatoren eine Mindest-Filmbildungstemperatur im Bereich von etwa 0 bis 15°C und insbesondere von etwa 5 bis 10°C besitzen. Beim Abziehen der wäßrigen Phase - sei es durch Absinken in den Untergrund, sei es durch Verdunsten - bilden sich dann unter normalen Arbeitsbedingungen hinreichend geschlossene Schichten der Stabilisatoren innerhalb der Imprägnierung und/oder auf ihrer Oberfläche aus, so daß die angestrebte Schutzwirkung gegen die Einwirkung eines Übermaßes an Nässe erfüllt werden kann.

Geeignete Stabilisatoren können dabei im Bereich dieser Filmbildungstemperatur als Feststoffe oder als fließfähige Phasen vorliegen. Beim Einsatz von Stabilisatoren, die bei der Filmbildungstemperatur als Feststoffe ausgebildet sind, kann die Mitverwendung insbesondere organischer Fließhilfsmittel geeeignet sein, die bevorzugt mit den Stabilisatoren mischbar und dabei biologisch verträglich und ihrerseits abbaubar sind. Geeignete Fließhilfsmittel dieser Art sind beispielsweise im Temperaturbereich von 5 bis 15°C fließfähige und dabei bevorzugt schwerflüchtige Komponenten auf Basis Alkohole, Ether und/oder Carbonsäureester.

In der Ausführungsform werden als Stabilisatoren wenigstens anteilsweise olefinisch 1- und/oder mehrfach ungesättigte Fettsäuren, Fettalkohole und/oder deren Derivate mit Ester- und/oder Etherstruktur eingesetzt. Das Vorliegen der olefinischen Doppelbindungen und ihr Ausmaß stellen selbst im Falle geradkettiger Fettkomponenten der hier betroffenen Art in der Regel sicher, daß eine hinreichende Fließfähigkeit im Bereich der Applikationstemperatur des zu behandelnden Bodens gegeben ist, so daß die Ausbildung geschlossener hydrophober Schichten und damit die Ausbildung der angestrebten Wasserstabilisierung sichergestellt sind. Olefinisch ungesättigte Stabilisatoren der hier betroffenen Art bringen dabei den zusätzlichen Vorteil: In an sich bekannter Weise findet unter der Einwirkung des Luftsauerstoffes die Auftrocknung entsprechender fließfähiger Fettverbindungen und damit die Umwandlung der ursprünglich flüssigen Filme in Feststoffilme statt. Das Anforderungsprofil der biologischen Abbaubarkeit bleibt gleichwohl erhalten, vgl. hierzu die bereits eingangs zitierte Literaturstelle Heinz Kastien et al. in "Farbe und Lack" 1992.

Eine Besonderheit für die Ausbildung wenigstens weitgehend geschlossener Filme mit fettchemischen Charakter liegt in der folgenden Ausführungsform: Sowohl gesättigte als auch olefinisch 1- und/oder mehrfach ungesättigte Fettsäuren können durch Einwirkung insbesondere mehrwertiger Kationen in die entsprechenden Salze umgewandelt werden, die sich in der Regel durch veränderte rheologische Eigenschaften auszeichnen. Als mehrwertige salzbildende Kationen sind insbesondere entsprechende Vertreter der 2. und/oder der 3. Hauptgruppe des Periodischen Systems und hier insbesondere Calcium und/oder Aluminium geeignet und bevorzugt. Die Salzbildung kann dabei vor aber auch gegebenenfalls nach dem Auftrag der Stabilisatoren auf den Boden erfolgen. Im Falle entsprechender Salze mit olefinisch ungesättigten Anteilen in den Carbonsäureresten kann auch hier eine nachträgliche oxidative Abreaktion und damit weitergehende Stabilisierung erfolgen.

Besondere Bedeutung kann im Rahmen der erfindungsgemäßen Lehre Stabilisatoren mit Esterstruktur zukommen, wobei in einer ersten Stoffklasse die definierten Fettsäurereste die Esterstruktur bestimmen. In Betracht kommen hier beispielsweise Voll- und/oder Partialester von wenigstens anteilsweise olefinisch ungesättigten Fettsäuren mit mehrfunktionellen Alkoholen. Bevorzugte Ester leiten sich von niederen mehrfunktionellen Alkoholen mit insbesondere 2 bis 6 Hydroxylgruppen und bevorzugt mit bis zu 6 C-Atomen ab. Entsprechende Glyceride bzw. Partialglyceride der Fettsäuren und/oder deren Oligomere können besonders interessante Vertreter für die Lehre im Rahmen des erfindungsgemäßen Handelns sein.

Lediglich beispielhaft ist in diesem Zusammenhang auf insbesondere naturstoffbasierte Öle und/oder Fette zu verweisen, die bekanntlich als Triglyceride von Fettsäuren bzw. Fettsäuregemischen mit wenigstens anteilsweise olefinisch ungesättigten Fettsäurekomponenten im Triglycerid anfallen. Je nach Struktur und Konzentration der ungesättigten Fettsäurereste sind diese Öle und/oder Fette zur oxidativen Aushärtung unter dreidimensionaler Vernetzung geeignet. Die Praxis macht hiervon bekanntlich in größtem Umfange Gebrauch, verwiesen wird beispielsweise auf das Gebiet der Lackrohstoffe auf dem beispielsweise Leinöl basierte oxidativ aushärtende Öle natürlichen Ursprungs seit altersher in großem Umfang Verwendung finden. Für das erfindungsgemäße Einsatzgebiet können solche Stabilisatoren natürlichen Ursprungs wichtige Komponenten sein. Dabei kann mit oder ohne Zusatz von Härterkomponenten gearbeitet werden, die in der Regel eine Beschleunigung der Ausbildung eines dreidimensional vernetzten Lackfilmes begünstigen. Auf das einschlägige Fachwissen kann in diesem Zusammenhang verwiesen werden.

Eine andere bevorzugte Klasse esterbasierter Stabilisatoren kann als Oligo- bzw. Polyester aus Fettsäuren und/oder Fettalkoholen und mehrfunktionellen Reaktanten aus den Klassen der Oligo- bzw. Polycarbonsäuren und/oder Oligo- bzw. Polyalkohole definiert werden. Beispiele hierfür sind die bekannten Polyester vom Typ der Alkydharze, ebenso aber auch mit Fettsäureresten veresterte Polyvinylalkohol-Oligomere und -Polymere bzw. mit gegebenenfalls olefinisch ungesättigten Fettalkoholresten veresterte (Meth)acrylat-Oligomere und/oder -Polymere. Auch im Rahmen der Auswahl dieser Stabilisatoren kann ein wichtiges Kriterium die Frage der hinreichend vollständigen Abbaubarkeit durch natürliche Abbauprozesse im Boden nicht nur einzelner Anteile der Ester- bzw. Polyesterstruktur sein, insbesondere kann die Auswahl für den erfindungsgemäBen Einsatzzweck mitbestimmt werden durch die Abbaubarkeit auch der primär entstehenden Teilstücke des Einsatzmoleküls, beispielsweise im Rahmen einer Esterhydrolyse.

Im Rahmen der zuvor als geeignete Stabilisatorklasse angesprochenen Alkydharze kann der Einsatz ausgewählter Verbindungen dieser Art bevorzugt sein, die wenigstens weitgehend naturstoffbasiert sind. Der Begriff der Alkydharze erfaßt bekanntlich Polyester aus Polycarbonsäuren, Polyolen und monofunktionellen Alkoholen und/oder Carbonsäuren. Oxidativ reaktive Alkydharze sind grundsätzlich bekannte Produkte des Handels, insoweit kann auf das allgemeine Fachwissen verwiesen werden. Sie können beispielsweise als Grundstoffe für lufttrocknende Lacke Verwendung finden. Bekannte Handelsprodukte sind dabei insbesondere auch in Form wäßriger Dispersionen ausgebildet, die die selbsttrocknenden Alkydharze als feinpartikulär dispergiertes Harz in einer geschlossenen wäßrigen Flüssigphase enthalten.

Luftreaktive wäßrige Alkydharzdispersionen dieser Art sind besonders geeignete Einsatzmaterialien für die Zwecke der Erfindung.

Die oxidative Reaktivität solcher Alkydharzderivate leitet sich in der Regel aus einem Gehalt an olefinisch ungesättigten Substituenten am Alkydharz-Polyestermolekül ab. In an sich bekannter Weise können solche olefinisch ungesättigten Reaktivelemente durch Einbau ungesättigter Alkohole und/oder ungesättigter Carbonsäuren in das Alkydharzmolekül eingetragen werden. Besonderes Interesse können hier - auch gerade im Zusammenhang mit der erfindungsgemäßen Lehre - solche Vertreter der angesprochenen Alkydharztypen haben, die wenigstens weitgehend auf naturstoffbasierten Grundbestandteilen aufgebaut sind. So können zur Derivatisierung der Alkydharze Monocarbonsäuren und/oder monofunktionelle Alkohole natürlichen Ursprungs Verwendung finden. Beim Einsatz von Dicarbonsäuren und wenigstens 3-funktionellen Alkoholen in Kombination mit monofunktionellen Carbonsäuren und gegebenenfalls weiteren Diolen werden beispielsweise entsprechende Monocarbonsäure-derivatisierte Alkydharze zugänglich, die dadurch oxidativ reaktiv bzw. oxidativ vernetzbar ausgestaltet werden können, daß die eingesetzten Monocarbonsäuren wenigstens anteilsweise einfach und/oder mehrfach olefinisch ungesättigt sind. In an sich bekannter Weise kann durch Umkehr der Funktionalitäten auch ein mit olefinisch ungesättigten Alkoholen modifiziertes oxidativ reaktives Alkydharz hergestellt werden.

Naturstoffbasierte Alkydharze der erfindungsgemäß besonders bevorzugten Art gehen dabei vom Glycerin als 3-funktionelle Polyolkomponente und Fettsäuren natürlichen Ursprungs als monofunktionelle Carbonsäurekomponente aus. Die monofunktionellen Reaktanten werden dabei im Mittel etwa in solchen Mengen eingesetzt, daß die gewünschte Abreaktion mit Dicarbonsäuren - die in einer bevorzugten Ausführungsform ihrerseits in natürlichen Abbauprozessen abbaubar sind - möglich wird. Wenigstens überwiegend naturstoffbasierte modifizierte Alkydharze dieser Art zeichnen sich dann beispielsweise dadurch aus, daß mehr als 50 Gew.-% und vorzugsweise zwischen 60 und 70 Gew.-% des Alkydharzes aus naturstoffbasierten Komponenten, insbesondere Glycerin und monofunktionellen Fettsäuren, gebildet wird, während zum Rest Dicarbonsäuren und gegebenenfalls zusätzliche Diolkomponenten im Polymermolekül vorliegen.

Für den Eintrag der erfindungsgemäßen Stabilisatoren in das Erdreich bieten sich insbesondere zwei Arbeitsweisen an, die gewünschtenenfalls auch miteinander verbunden werden können. In einer ersten Ausführungsform wird im ersten Arbeitsschritt das Imprägniermittel auf Basis der Polyvinylesterzubereitungen eingetragen und getrennt hiervon im Anschluß die Stabilisatorzubereitung auf- bzw. eingetragen. Ebenso ist aber auch der gemeinsame Eintrag der beiden Behandlungsmittel in die Erdreichoberfläche möglich. Gewünschtenfalls können dazu die in der Regel wäßrigen Zubereitungen der Imprägniermasse und der Stabilisatoren zunächst miteinander vermischt und dann gemeinsam auf das Erdreich aufgebracht werden. Eine Kombination dieser beiden Eintragsmechanismen ist möglich. Die theoretisch bestehende weitere Variante des vorgängigen Eintrags der Stabilisatormasse und des nachträglichen Eintrags der Imprägniermasse führt in der Regel zu unbefriedigenden Ergebnissen.

Die im Einzelfall einzusetzende Menge der Stabilisatoren wird durch eine Mehrzahl von Faktoren beeinflußt. Im allgemeinen sind Mindestmengen von wenigstens etwa 50 g/m² Bodenfläche und vorzugsweise Mengen von wenigstens etwa 100 g/m² Bodenfläche wünschenswert und geeignet, nachhaltige Festigkeitserhöhungen der Imprägniermasse auf Polyvinylacetat-Basis sicherzustellen. Die hier angegebenen unteren Grenzwerte beziehen sich dabei auf die wasserfreien und von gegebenenfalls mitverwendeten Fließhilfsmitteln freien Stabilisatorwertstoffe bzw. -wertstoffgemische. Stabilisatormengen bis 400 g/m² Bodenfläche können in Sonderfällen wünschenswert sein, im allgemeinen werden befriedigende Ergebnisse mit Stabilisatormengen im Bereich von etwa 150 bis 250 g/m² Bodenfläche erzielt.

Die Mengenverhältnisse an Stabilisator einerseits und Imprägniermittel andererseits - auch hier jeweils bezogen auf die insbesondere wasserfreien reinen Wertstoffgemische - können in einem breiteren Bereich schwanken. Geeignet sind beispielsweise Mengenverhältnisse des insbesondere PVAcbasierten Imprägniermittels zu den Stabilisatoren (wasserfreie Wertstoffe) im Bereich von etwa 5 : 1 bis 1 : 5 und vorzugsweise im Bereich von 1 : 3 bis 2 : 1. In zahlreichen Anwendungsfällen haben sich etwa gleiche Mengenverhältnisse an Imprägniermasse und Stabilisatormasse als brauchbar erwiesen.

Durch hinreichende Verdünnung des Wertstoffgehaltes in den zum Einsatz kommenden wäßrigen Zubereitungen kann in gewissem Ausmaß Einfluß auf die Tiefe der in der Bodenoberfläche sich einstellenden Imprägnierung genommen werden. Der Auftrag der jeweiligen wäßrigen Wertstoffzubereitungen kann dabei von Hand, beispielsweise mit der Gießkanne, insbesondere aber im großtechnischen Einsatz mittels Sprühdüsen erfolgen. Sofern nicht ein gemeinsamer bzw. gleichzeitiger Auftrag der beiden hier betroffenen Komponenten in einem Arbeitsgang erfolgt kann es zweckmäßig sein, zwischem dem ersten Auftrag der Imprägniermasse und dem zweiten Auftrag der erfindungsgemäß definierten wäßrigen Stabilisatorzubereitungen einen beschränkten Zeitraum verstreichen zu lassen, der üblicherweise im Stundenbereich liegt, gegebenenfalls aber auch länger sein kann.

Zur Beschaffenheit der Imprägniermasse auf Basis ausgewählter Polyvinylester-Dispersionen ist bereits auf die ältere deutsche Patentanmeldung P 43 24 474.2 der Anmelderin verwiesen worden. Über deren Offenbarung hinausgehend gelten die zusätzlichen Angaben:

Als polymeres Bindemittel der Imprägniermasse ist primär Polyvinylacetat geeignet. Die erfindungsgemäße Lehre schränkt sich darauf jedoch nicht ein. Auch andere Polymere des Vinylalkohols mit niederen Monocarbonsäuren - insbesondere mit bis zu 4 oder 5 C-Atomen im Carbonsäurerest - kommen in Betracht. Neben Polyvinylacetat kommt insbesondere dem Polyvinylpropionat bzw. seinen wäßrigen Zubereitungen wichtige Bedeutung zu. Dabei können sowohl Homopolymere als auch Copolymere der hier angegebenen Polyvinylester zum praktischen Einsatz kommen.

In einer weiteren Modifikation der erfindungsgemäßen Lehre kann ein wichtiger Bestandteil der Imprägniermasse aus der Gruppe der Vinylestercopolymeren abgeleitet sein. In Betracht kommen hier insbesondere Copolymere der niederen Vinylester von der Art des Vinylacetats und/oder -propionats mit Vinylestern höherer monofunktioneller Carbonsäuren. In dieser Copolymerengruppe sind bevorzugte Vertreter die Vinylester von insbesondere gesättigten Monocarbonsäuren mit wenigstens 8 und vorzugsweise mit wenigstens 10 C-Atomen, dabei kann dem Bereich von 10 bis 16 C-Atomen im Monocarbonsäurerest wiederum besondere Bedeutung zukommen. Ein aus einer Mehrzahl von Überlegungen heraus wichtiger Vertreter für ein solches Copolymeres ist beispielsweise ein Polyvinylacetat-Colaurat.

Im nachfolgenden werden zur Vervollständigung der Erfindungsoffenbarung unter Bezugnahme auf die zitierte ältere Anmeldung Gesetzmäßigkeiten zur Imprägniermasse auf Polyvinylacetat-Basis beschrieben, sinngemäß sind diese Angaben für die hier zuvor beschriebene erweiterte Möglichkeit der Ausbildung der Polymerverbindungen in der Imprägniermasse anwendbar.

Den wäßrigen Polyvinylacetat-Dispersionen werden in der Regel Weichmacher zur Verbesserung der mechanischen Belastbarkeit der imprägnierten Erdreichflächen zugegeben. Die bevorzugten biologisch abbaubaren Weichmacher sind Triester des Glycerins mit niederen aliphatischen Monocarbonsäuren, Citronensäuretriester mit niederen aliphatischen monofunktionellen Alkoholen und/oder epoxidierte Triglyceride wenigstens anteilsweise olefinisch ungesättigter Fettsäuren. Diese Weichmacher werden den wäßrigen PolyvinylacetatDispersionen in untergeordneten Mengen zugesetzt. Üblich sind Mengen von etwa 1 bis 15 Gew.-%, vorzugsweise Mengen von etwa 3 bis 10 Gew.-% - bezogen jeweils auf eine ca. 50 Gew.-%ige wäßrige Polyvinylacetat-Dispersion. Bevorzugte Glycerintriester aliphatischer Monocarbonsäuren enthalten Monocarbonsäurereste mit 2 bis 4C-Atomen im Molekül. Besondere Bedeutung kommt hier dem Triacetin als Weichmacher zu. Geeignete Citronensäuretriester enthalten Reste aliphatischer monofunktioneller Alkohole mit 2 bis 6 C-Atomen und insbesondere Reste entsprechender Alkohole mit 2 bis 4 C-Atomen. Geeignet sind dabei in dieser Gruppe Citronensäuretriester, die den Rest der Citronensäure als solche enthalten, aber auch entsprechende Derivate der Citronensäure in der Form der an ihrer Hydroxylgruppe acylierten Variante.

Charakteristisch für die Weichmacher der Imprägniermasse ist, daß schon vergleichsweise geringe Mengen an Weichmacherkomponenten eine hinreichende Flexibilisierung der verfestigten Schicht gewährleisten.

Eine Besonderheit bezüglich der Notwendigkeit des Weichmacherzusatzes kann für den Fall des Einsatzes der zuvor genannten Vinylestercopolymeren gegeben sein, die im Molekül niedere Vinylester von der Art des Vinylacetats und/oder -propionats zusammen mit Vinylestern höherer monofunktioneller Carbonsäuren - insbesondere des Fettsäurebereiches - enthalten. Weiterführende Untersuchungen der Anmelderin haben gezeigt, daß Imprägniermittel auf Basis dieser Vinylestercopolymeren auch schon ohne Zusatz von Weichmachern die beiden Erfordernisse der hinreichend entsprödeten Imprägnierung und der biologischen Abbaubarkeit erfüllen. Hier kann also auf die Mitverwendung von Weichmachern verzichtet werden, wie sie nach dem Stand der Technik bekannt sind bzw. im Rahmen der eingangs zitierten älteren deutschen Patentanmeldung P 43 24 474.2 der Anmelderin beschrieben werden.

Auch für die erfindungsgemäße Lehre gilt die bevorzugte Maßnahme, daß auch weitere Zusatzstoffe der ausgewählten wäßrigen Imprägnier- und Stabilisatormassen biologisch abbaubar und damit bioverträglich sind. Hier sieht die Erfindung insbesondere die Mitverwendung von biologisch abbaubaren Schutzkolloiden zur Stabilisierung der wäßrigen Zubereitungen vor. Geeignete Schutzkolloide sind beispielsweise Polyvinylalkohol, andererseits aber auch Stärke und/oder wasserlösliche Stärkederivate, wobei die Stärke auch einem partiellen Molgewichtsabbau unterworfen sein kann. Der Einbau von leicht abbaubaren Naturstoffen von der Art der Stärke und/oder wasserlöslicher Stärkederivate bringt allerdings die Gefährdung der Filmstabilität gegen Errosion durch Beregnung und damit die Gefahr eines zu raschen Filmabbaus. Die erfindungsgemäße Mitverwendung der Stabilisatoren kann hier eine wichtige Abhilfe geben. Die Mengen der Schutzkolloide bzw. Emulgatoren liegen üblicherweise bei höchstens etwa 5 Gew.-% und insbesondere im Bereich von etwa 0,5 bis 3 Gew.-% - bezogen jeweils auf den wasserfreien Wertstoff der eingesetzten wäßrigen Emulsion bzw. Dispersion.

Auch im Rahmen der erfindungsgemäßen Lehre kann von den technischen Elementen Gebrauch gemacht werden, die im einschlägigen Stand der Technik zur Ausbildung entsprechender Oberflächenfilme entwickelt worden sind. Beispielhaft sei hier auf die Mitverwendung von wachstumsfördernden Wirkstoffen, insbesondere Hilfsstoffen mit Düngemittelcharakter und/oder auf die Mitverwendung von bevorzugt feinteiligem partikulärem Feststoffgut, insbesondere in der wäßrigen Zubereitung des Imprägniermittels verwiesen. In dem zuletzt angesprochenen Fall sieht der Stand der Technik bekanntlich insbesondere die Mitverwendung von feinteiligen Feststoffen auf Naturstoffbasis wie Holzmehl, Strohpartikel, Getreideschalen, Kokos- und/oder Flachsfasern und dergleichen vor, um auf diese Weise die Entstehung lokaler Durchbruchsstellen zur weitergehenden Förderung des Pflanzenwachstums zu ermöglichen, ohne dabei den Gesamtzusammenhalt der verfestigten Schicht zu gefährden.

Die Mitverwendung geringer Mengen tensidischer Komponenten, insbesondere in den wäßrigen Zubereitungen des Imprägniermittels und/oder der Stabilisatoren kann wünschenswert sein. Geeignet sind dabei insbesondere oberflächenaktive Komponenten vom O/W-Typ, die sich in der bevorzugten Ausführungsform ihrerseits auch durch biologische Verträglichkeit und insbesondere biologische Abbaubarkeit auszeichnen. Besondere Bedeutung kann in diesem Zusammenhang entsprechenden Tensiden auf Basis von Alkylpolyglykosiden (APG) zukommen. Durch Einsatz solcher Komponenten kann einerseits die Stabilisierung, insbesondere von Stabilisatorkomponenten in wäßrigen Zubereitungen, erleichtert werden - beispielsweise die Stabilisierung von Leinöl als wäßrige Dispersion - andererseits kann damit aber auch die Benetzung des zu verfestigenden Bodens gefördert werden. Praktische Bedeutung kommt einer solchen Arbeitshilfe beispielsweise bei der Verfestigung von übertrockneten Sandflächen zu. Zu Art und Menge der jeweils eingesetzten oberflächenaktiven Hilfsmittel wird auf das einschlägige Fachwissen verwiesen.

In an sich bekannter Weise kann der Auftrag der bodenverfestigenden wäßrigen Wirkstoffzubereitungen mit dem Auftrag von Pflanzensamen erfolgen. Die entsprechende Ausrüstung des Bodens kann aber auch unabhängig von der Verfestigung vor oder nach dem Auftrag insbesondere der erfindungsgemäß definierten wäßrigen Imprägniermasse erfolgen.

Feldversuche mit den erfindungsgemäß beschriebenen Hilfsmitteln haben gezeigt, daß nicht nur die angestrebte Verfestigung der Erdreichoberfläche eingestellt und über einen beträchtlichen Zeitraum von wenigstens mehreren Wochen aufrechterhalten werden kann - ohne dabei die Keimungsvorgänge und das sich bildende Pflanzenwachstum substantiell zu beeinträchtigen -, es hat sich darüberhinaus ein weiterer häufig wünschenswerter Effekt gezeigt: Die Wasserretention ist in dem erfindungsgemäß ausgerüsteten Bodenbereichen deutlich erhöht gegenüber benachbarten nicht behandelten Bodenbereichen. Es leuchtet ein, daß sich hier insbesondere für die Verfestigung und Begrünung von Erdreichflächen in Trockengebieten und/oder unter vergleichsweise heißen klimatischen Bedingungen wichtige Vorteile auftuen.

Die Erfindung sieht zur Verstärkung dieses Effektes eine weitere mögliche Modifikation vor: Die naturstoffbasierte Chemie, die synthetische Chemie und/oder halbsynthetische Chemie hat eine Mehrzahl von Polymerkomponenten entwickelt, die sich durch ein extremes Wasseraufnahmevermögen und ein hohes Retentionsvermögen für das aufgenommene Wasser auszeichnen. Unter dem Fachbegriff der "super-slurpers" finden diese Materialien auf verschiedensten Anwendungsgebieten, insbesondere im hygienischen Bereich, großtechnische Verwertung. Geeignete Zubereitungsformen solcher wasserbindenden Polymerstoffe können nun auch erfindungsgemäß zur Ausrüstung der Oberflächenschichten des Erdreichs und damit zur Förderung des Pflanzenwachstums unter Einschränkung der Menge und/oder Häufigkeit einer künstlichen Beregnung der mit Pflanzensamen, beispielsweise Grassamen, ausgerüsteten Erdreichoberfläche Verwendung finden. Diese wasserbindenden halbsynthetischen oder vollsynthetischen Polymerstoffe können dabei vor der Behandlung der Erdreichoberfläche mit den erfindungsgemäß beschriebenen Imprägniermassen in das Erdreich eingetragen werden, gegebenenfalls ist aber auch an eine Kombination der wasserbindenden Hilfsstoffe mit wenigstens einem Anteil der Imprägniermasse mit Klebstoffcharakter zu denken. Zur chemischen Beschaffenheit dieser wasserbindenden Hilfsstoffe wird auf die einschlägige Fachliteratur zu den Hilfsstoffen der hier angesprochenen Art verwiesen. Auch die Mitverwendung von wachstumsfördernden Hilfsstoffen ist möglich und fällt in den Rahmen der erfindungsgemäßen Lehre.

### Beispiele

### Beispiel 1

In einer ersten Versuchsreihe wird als Arbeitsmodell die Befestigung von grobem Bausand vorgenommen. Dieser Bausand wird dabei in Wannen der Abmessung 33 x 24 cm gegeben. Die Schichtdicke des Sandes beträgt jeweils ca. 2 bis 3 cm.

Es wird mit einem Bindemittel auf Basis einer wäßrigen Polyvinylacetat-Dispersion (1. Versuchsgruppe) bzw. einer entsprechenden wäßrigen Dispersion eines Vinylacetat/Vinyllaurat-Copolymeren - Gewichtsverhältnis VAc/VL etwa 3/1 - (2. Versuchsgruppe) gearbeitet, die mit Wasser auf einen Feststoffgehalt von jeweils 10 Gew.-% verdünnt worden sind. Von diesen Dispersionen werden jeweils 2.000 g/m² möglichst gleichmäßig auf die Sandoberfläche aufgesprüht, aufgeregnet oder aufgepinselt. Die Ansätze der 1. Versuchsgruppe enthalten Triacetin als Weichmacher, die Ansätze der 2. Versuchsgruppe werden Weichermacher-frei zusammengestellt.

Nach einer Zwischentrocknungsdauer von ca. 24 Stunden wird der Stabilisator - ebenfalls in Form einer auf 10 Gew.-% verdünnten wäßrigen Zubereitung - in einer Menge von 2.000 g/m² aufgetragen. Damit beträgt die jeweils aufgetragene Polymermenge sowohl an PVAc bzw. Copolymer wie an dem Stabilisator jeweils 200 g/m².

In alternativen Versuchen wird eine 20 Gew.-%ige wäßrige Dispersion zur Behandlung des Bausandes in den Wannen eingesetzt, die 10 Gew.-% PVAc und 10 Gew.-% des Stabilisators enthält. Die Anwendungsmenge beträgt auch hier 2.000 g/m².

Als Stabilisator im Sinne der erfindungsgemäßen Lehre wird eine handelsübliche Alkydharz-Dispersion - Handelsprodukt "Jägalyd WE 57" der Firma E. JÄGER, Düsseldorf - eingesetzt.

Die erfindungsgemäß behandelten Sandproben in diesen Wannen werden getrocknet und beurteilt oder einem Beregnungszyklus unterworfen und dann die Festigkeit im Feuchten bestimmt. Bestimmt wird darüberhinaus die Schichtdicke der verfestigten Sandbereiche.

Die Einzelheiten zu den vorgenommenen Behandlungsschritten und die jeweilige Nachbehandlung bzw. Beurteilung der Versuchsproben finden sich in der nachfolgenden Tabelle 1. Für die Festigkeitsbewertung der behandelten Sandschicht gelten dabei die folgenden Symbole:
F++ = harte Oberfläche
F+ = Oberfläche gibt nach, jedoch gefestigt
F- = Oberfläche zum Teil gefestigt
F-- = Oberfläche gering gefestigt

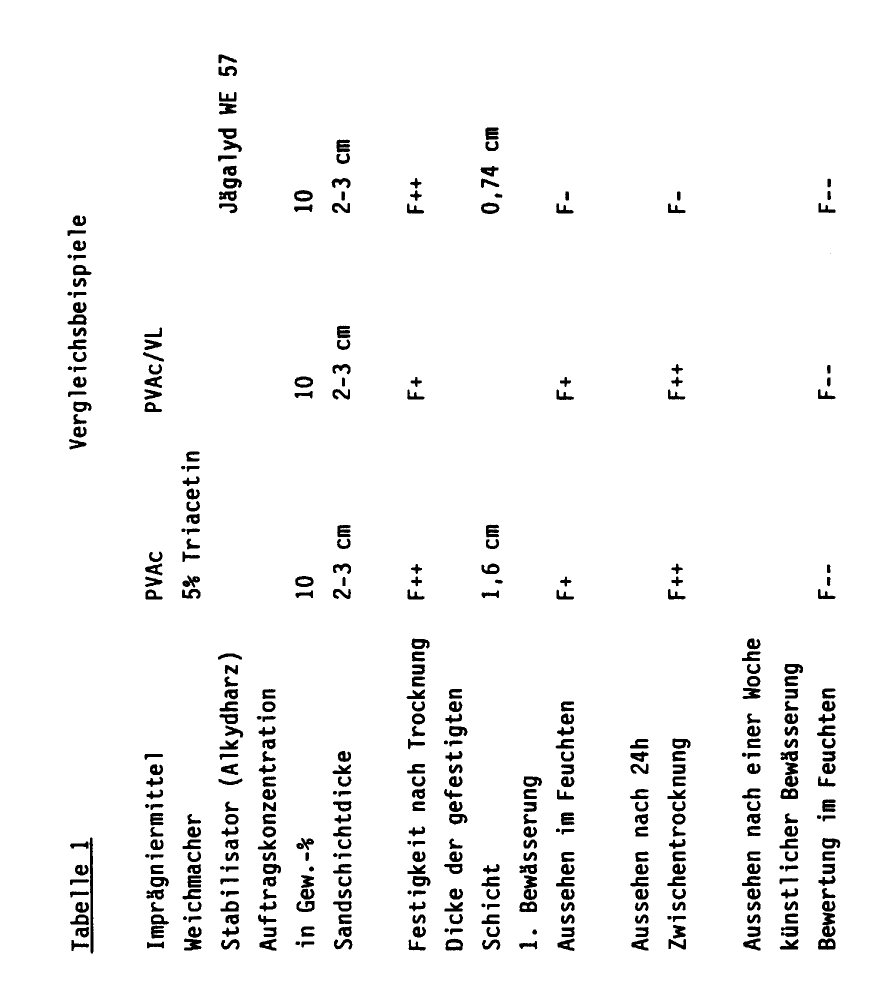

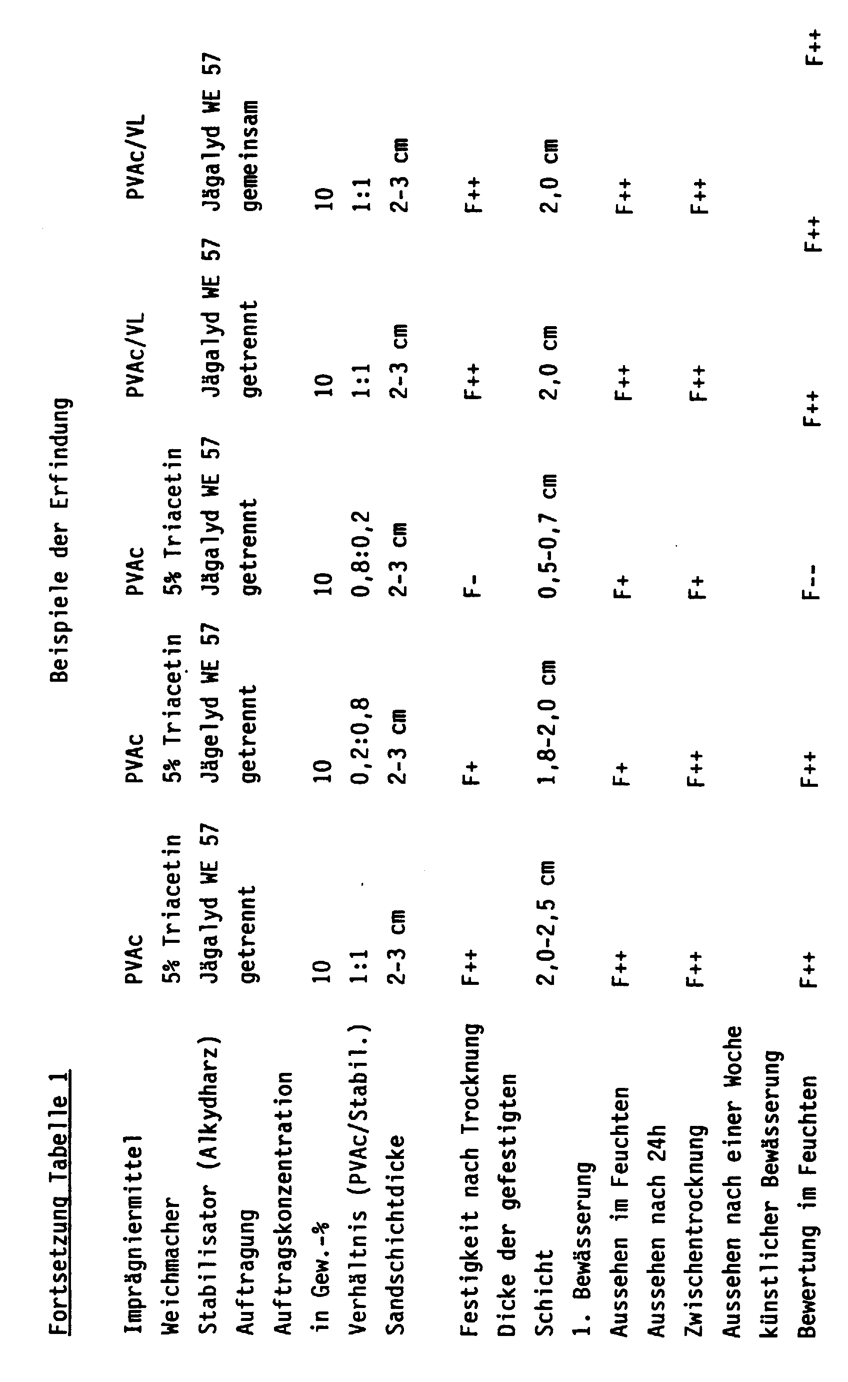

In einer weiteren Versuchsserie werden vergleichbare Wannen, wie zuvor beschrieben - nicht im Labor künstlich befeuchtet, sondern in den Monaten März bis April 1994 am Sitz der Anmelderin der feuchten Außenwitterung ausgesetzt und dann beurteilt.

Die Ergebnisse dieser Beurteilung sind in der nachfolgenden Tabelle 2 zusammengefaßt.

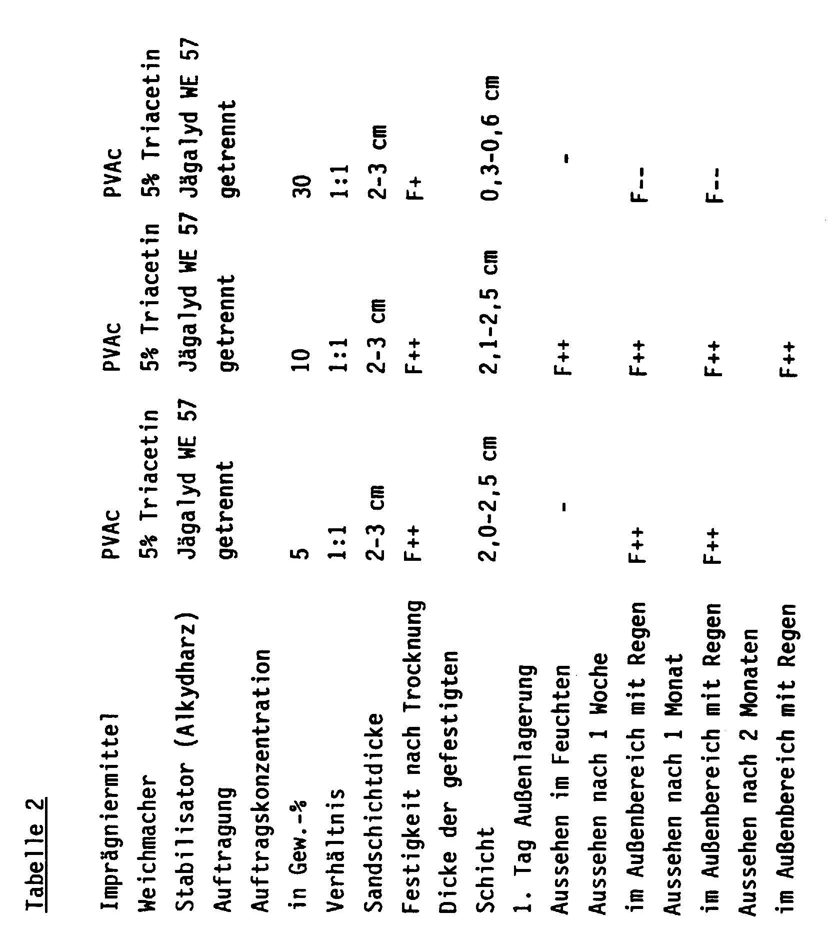

Der Vergleich der letzten Spalte der Tabelle 2 mit den davorliegenden Ergebnisspalten zeigt, daß bei unzureichender Eindringtiefe der Imprägniermassen in die Erdreichoberfläche unbefriedigende Verfestigungswerte erhalten werden. Im hier dargestellten Fall hat durch die zu hohe Wertstoffkonzentration in den wäßrigen Behandlungsmitteln ein hinreichend tiefes Eindringen der Imprägniermasse und des zugehörigen Stabilisators nicht stattfinden können.

Zur Beurteilung des Einflusses unterschiedlicher Auftragsmengen und Auftragskonzentrationen werden die Versuche wie zuvor beschrieben, jetzt jedoch in Wannen mit einer Sand-Schichtdicke von ca. 10 cm, wiederholt. Die Ergebnisse sind in der nachfolgenden Tabelle 3 zusammengefaßt.

**Tabelle 3**

| Imprägniermittel Weichmacher Stabilisator (Alkydharz) Auftrag | PVAc 5% Triacetin Jägalyd WE 57 gemeinsam | PVAc 5% Triacetin Jägalyd WE 57 gemeinsam | PVAc 5% Triacetin Jägalyd WE 57 gemeinsam |
|---|---|---|---|
| Auftragskonzentration in Gew.-% | 5 | 10 | 30 |
| | | | |
| Verhältnis | 1 : 1 | 1 : 1 | 1 : 1 |
| | | | |
| Sandschichtdicke | 10 cm | 10 cm | 11 cm |
| | | | |
| Festigkeit nach Trocknung | F++ | F++ | F+ |
| | | | |
| Dicke der gefestigten Schicht | 2,0-2,1 cm | 2,1-2,4 cm | 0,8-1,0 |
| | | | |
| 1.Tag Außenlagerung Aussehen im Feuchten | F++ | F++ | F- |

### Beispiel 2

In weiterführenden Versuchen werden die Ergebnisse der Laborversuche gem. Beispiel 1 im Praxistest untersucht.

Ein Erdwall mit ca. 45° Neigung und 5 m Höhe wird in 2 m breiten Segmenten mit den wäßrigen Befestigungsmitteln im erfindungsgemäßen Sinne beschichtet. Dabei wird die Flüssigkeit in einen Druckbehälter gegeben und bei ca. 8 bar Behälterdruck über eine Flachdüse versprüht. Die Auftragung dauert jeweils etwa 3 bis 5 min.

Zum Zeitpunkt des Auftrages war der Erdwall schwach feucht (Regen am Vortag). Das Wetter war während des Auftrags und am anschließenden Tag trokken. Zum Test des Pflanzenwachstums wurden sowohl die zu behandelnden Segmente als auch die Umgebung dieser Segmente mit Naturwiesensamen angesäht.

Es werden dabei 7 Versuchsfelder gem. den nachfolgenden Angaben zu "Versuchsnummern 1 bis 7" ausgerüstet und beurteilt. Im einzelnen gelten die nachfolgenden Versuchsdetails.

### Versuchsnummer: 1

| Befestigungsmaterial | PVAc |
|---|---|
| Auftragungsart | sprühen |
| Lieferform | 57,5 Gew.-% |
| Auftragungsform | 10 Gew.-% |
| Verdünnung der Lieferform mit Wasser im Verhältnis | 1 : 5,75 |
| Beschichtete Fläche | 10 m² |
| Eingesetzte Menge der Auftragungsform | 20 l |
| Belegungsdichte mit Feststoff | 200 g/m² |
| Nachbehandlung | keine |
| Ergebnisse direkt nach Auftragung | flexibel, zusammenhängend |

### Versuchsnummer: 2

| Befestigungsmaterial | PVAc | Alkydharz |
|---|---|---|
| Auftragungsart | sprühen getrennt | sprühen nach 3 h Wartezeit |
| Lieferform | 57,5 Gew.-% | 65 Gew-% |
| Auftragungsform | 10 Gew.-% | 10 Gew-% |
| Verdünnung der Lieferform mit Wasser im Verhältnis | 1 : 5,75 | 1 : 6,5 |
| Beschichtete Fläche Eingesetzte Menge der Auftragungsform | 10 m² 20 l | 10 m² 20 l |
| Belegungsdichte mit Feststoff | 200 g/m² | 200 g/m² |
| Nachbehandlung | keine | keine |
| Ergebnisse direkt nach Auftragung | flexibel, zusammenhängend | flexibel, zusammenhängend |

### Versuchsnummer: 3

| Befestigungsmaterial | PVAc | Alkydharz |
|---|---|---|
| Auftragungsart | Gemisch gesprüht | |
| Lieferform | 57,5 Gew.-ù% | 65 Gew-% |
| Auftragungsform | 10 Gew.-% | 10 Gew-% |
| Verdünnung der Lieferform mit Wasser im Verhältnis | 1 : 2,9 | 1 : 3,3 |
| Beschichtete Fläche | 10 m² | 10 m² |
| Eingesetzte Menge der Auftragungsform | 20 l | 20 l |
| Belegungsdichte mit Feststoff | 200 g/m² | 200 g/m² |
| Nachbehandlung | keine | keine |
| Ergebnisse direkt nach | flexibel, | flexibel, |
| Auftragung | zusammenhängend | zusammenhängend |

### Versuchsnummer: 4

| Befestigungsmaterial | PVAc | Alkydharz |
|---|---|---|
| Auftragungsart | Gemisch gesprüht | |
| Lieferform | 57,5 Gew.-% | 65 Gew-% |
| Auftragungsform | 10 Gew.-% | 10 Gew-% |
| Verdünnung der Lieferform mit Wasser im Verhältnis | 1 : 2,9 | 1 : 3,3 |
| Beschichtete Fläche | 10 m² | 10 m² |
| Eingesetzte Menge der Auftragungsform | 20 l | 20 l |
| Belegungsdichte mit Feststoff | 200 g/m² | 200 g/m² |
| Nachbehandlung | wird nach 3 h mit 2 l/m² beregnet | |
| Ergebnisse direkt nach Auftragung | weich flexibel zusammenhängend | |

### Versuchsummer: 5

| Befestigungsmaterial | Handelsprodukt des Marktes auf Basis Oligo-Butadien |
|---|---|
| Auftragungsart | gesprüht |
| Lieferform | 35 Gew.-% |
| Auftragungsform | 3,5 Gew.-% |
| Verdünnung der Lieferform mit Wasser im Verhältnis | 1 : 10 |
| Beschichtete Fläche | 10 m² |
| Eingesetzte Menge der Auftragungsform | 10 l |
| Belegungsdichte mit Feststoff | 35 g/m² |
| Nachbehandlung | keine |
| Ergebnisse direkt nach Auftragung | kein Zusammenhalt |

### Versuchsnummer: 6

| Befestigungsmaterial | PVAc |
|---|---|
| Auftragungsart | mit Gießkanne |
| Lieferform | 57,5 Gew.-% |
| Auftragungsform | 10 Gew.-% |
| Verdünnung der Lieferform mit Wasser im Verhältnis | 1 : 5,75 |
| Beschichtete Fläche | 10 m² |
| Eingesetzte Menge der Auftragungsform | 20 l |
| Belegungsdichte mit Feststoff | 200 g/m² |
| Nachbehandlung | keine |
| Ergebnisse direkt nach Auftragung | weich flexibel, zusammenhängend |

### Versuchsnummer: 7

| Befestigungsmaterial | PVAc | Alkydharz |
|---|---|---|
| Auftragungsart | Gemisch gesprüht | |
| Lieferform | 57,5 Gew.-% | 65 Gew-% |
| Auftragungsform | 10 Gew.-% | 10 Gew-% |
| Verdünnung der Lieferform mit Wasser im Verhältnis | 1 : 2,9 | 1 : 3,3 |
| Beschichtete Fläche | 10 m² | 10 m² |
| Eingesetzte Menge der Auftragungsform | 10 l | 10 l |
| Belegungsdichte mit Feststoff | 100 g/m² | 100 g/m² |
| Nachbehandlung | keine | |
| Ergebnisse direkt nach Auftragung | flexibel zusammenhängend | |

Alle Versuchsfelder mit Ausnahme des Feldes 5 zeigten innerhalb von 3 Stunden nach der Beschichtung eine deutliche Befestigung der Bodenoberfläche. In Feld 5 (Behandlungsmittel auf Oligo-Butadienbasis) war keine substantielle Bodenbefestigung erkennbar.

In weiterführenden Versuchen werden die so behandelten Versuchsfelder und die angrenzenden Gebiete regelmäßig beobachtet und - aufgrund der heißen und trockenen Witterungslage - der künstlichen Beregung unterworfen. Im einzelnen gilt hier:

Witterung seit Versuchsbeginn Mitte Juni 1994: heiß und trocken. Keine Rißbildung durch Austrocknung in den Versuchsfeldern sichtbar.

10 Tage nach Ausbringung wird bei einer Außentemperatur von 28°C jedes Feld 5 Minuten lang mittels einer Pumpe beregnet. Es werden dabei mit einem Pumpendruck von ca. 25 bar 24,6 l Wasser pro m² aufgespritzt.

Die Beurteilung der Versuchsfelder zu 1 bis 7 ist dabei wie folgt:
Feld 1:
   Wasseraufnahme sehr gut, nach Beendigung der Beregung starke Rutschung am oberen Hangviertel
Feld 2:
   Wasseraufnahme sehr gut, Festigkeit bleibt bestehen, keine Risse, keine Rutschungen
Feld 3:
   Wasseraufnahme sehr gut, Festigkeit bleibt bestehen, keine Risse, keine Rutschungen
Feld 4:
   Wasseraufnahme sehr gut, Rißbildung nach 3 min Beregnung, Rutschgefahr
Feld 5:
   Wasseraufnahme nur mäßig, läuft viel oberflächlich ab, Rißbildung schon nach kurzer Beregnung, Ausschwemmungen, nach 3 min Beregnung abgebrochen
Feld 6:
   Wasseraufnahme sehr gut, Festigkeit bleibt bestehen, keine Risse, keine Rutschungen
Feld 7:
   Wasseraufnahme sehr gut, Festigkeit bleibt bestehen, keine Risse, keine Rutschungen

4 1/2 Stunden nach der Beregnung wird der Zustand der Versuchsfelder erneut geprüft und beurteilt. Im einzelnen gilt:
Feld 1:
   Oberfläche nur dünne Kruste, rissig
Feld 2:
   Oberfläche dünne Kruste, Zustand gut, leicht rissig
Feld 3:
   Wie Feld 2
Feld 4:
   Oberfläche etwas fester, seit Beregnung keine weiteren Risse oder Rutschungen
Feld 5:
   Von Oberflächenbehandlung kaum noch etwas zu sehen oder zu fühlen
Feld 6:
   Oberfläche hart aber nicht rissig, Zustand sehr gut
Feld 7:
   Wie Feld 6

Alle Versuchsfelder sind trotz starker Hitze nicht ausgetrocknet, sondern zeigen noch einen guten Feuchtigkeitszustand. Die unbehandelten Flächen neben den Versuchsfeldern sind in der gleichen Zeit sehr trocken geworden. Der zuvor ausgesäte Grassamen war von keinem der behandelten Versuchsfelder abgespült worden.

3 Wochen nach Versuchsbeginn - in diesen Zeitintervall haben mehrfache ergiebige Regengüsse auf die Versuchsfelder stattgefunden - ist der verfestigte Grassamen gekeimt, das Pflanzenwachstum erscheint im Vergleich zu den nicht behandelten benachbarten besamten Bodenflächen unbehindert zu sein.

### Beispiel 3

Gemäß der Methodik des Beispiels 1 werden weitere Versuche mit PVAc als Imprägniermittel, jetzt jedoch anderen Stabilisatoren im Sinne der erfindungsgemäßen Lehre durchgeführt. Die nachfolgende Tabelle 4 faßt die eingesetzten Arbeitsmittel und die dabei erhaltenen Ergebnisse zusammen.

Zunächst wird als Stabilisator das Handelsprodukt "JÄGALYD WE 156" der Firma E. JÄGER, Düsseldorf, eingesetzt. Hierbei handelt es sich um ein in Wasser emulgiertes trocknendes und schadstofffreies Bindemittel auf natürlich-synthetischer Basis, das beispielsweise für wasserverdünnbare Holzschutzlasuren eingesetzt werden kann. In den beiden weiteren Versuchen der Tabelle 4 wird als erfindungsgemäBer Stabilisator Leinöl eingesetzt, hierbei kommt Leinöl einmal in Form einer 10%igen wäßrigen Emulsion (APG als Emulgierhilfe) zum Einsatz, in einem weiteren Versuch wird Leinöl als solches auf die zu stabilisierende Sandfläche aufgetragen.

In allen Versuchen bildet eine mit 5 Gew.-% Triacetin versetzte wäßrige PVAc-Dispersion das Imprägniermittel, das in einem ersten Verfahrensschritt getrennt von dem erfindungsgemäBen Stabilisator auf die zu verfestigenden Sandflächen aufgetragen wird.

Einzelheiten zum jeweiligen Ansatz und die Austestungsergebnisse im Rahmen einer künstlichen Beregnung sind der nachfolgenden Tabelle 4 zu entnehmen. Die Beurteilung der Festigkeitswerte (F) entspricht dabei der in Beispiel 1 identifizierten Symbolik.

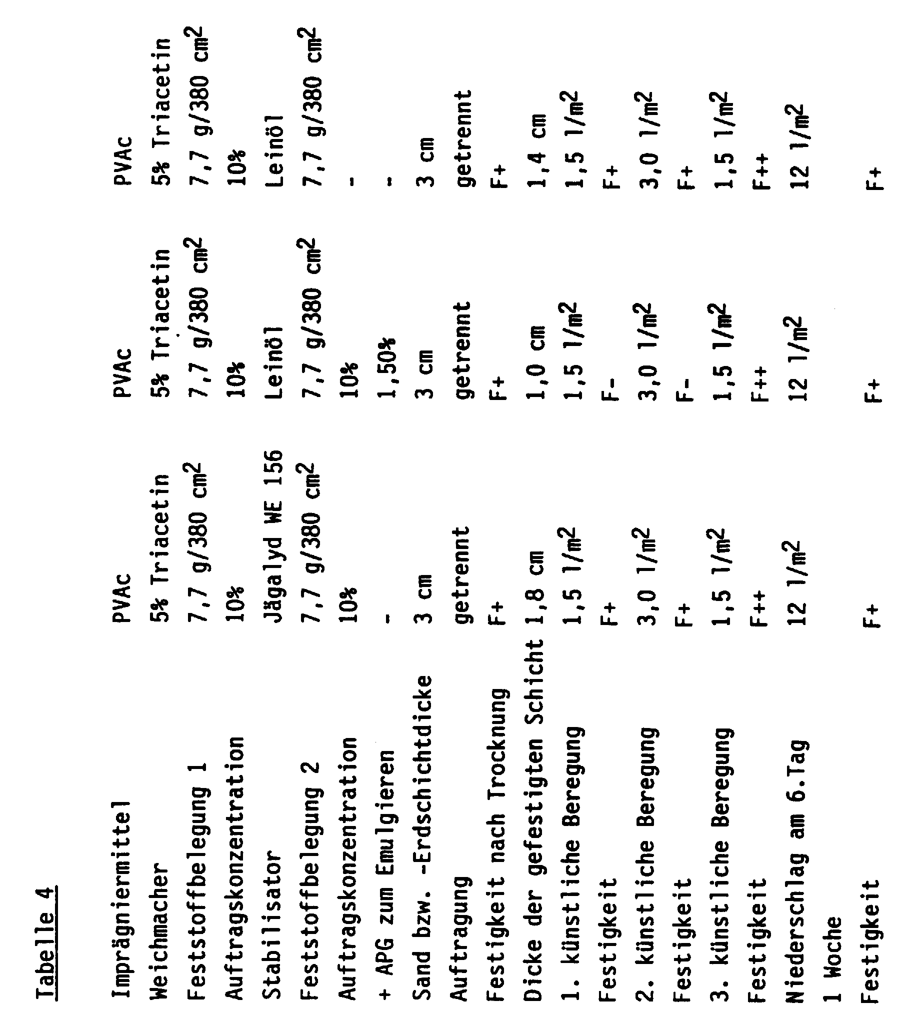

## Patentansprüche

1. Verwendung von wenigstens anteilsweise olefinisch 1- und/oder mehrfach ungesättigten Fettsäuren. Fettalkoholen und/oder ihren wenigstens weitgehend wasserunlöslichen Estern, Ethern und/oder Salzen als abbaubare und biologisch verträgliche Stabilisatoren zur Erhöhung der Wasserfestigkeit von Erdreich-Imprägnierungen auf Basis von Estern des Polyvinylalkohols mit C₁₋₅-Monocarbonsäuren und deren Gemischen mit untergeordneten Mengen höherer Monocarbonsäuren.

2. Verwendung nach Anspruch 1, dadurch gekennzeichnet, daß die Stabilisatoren zusammen mit biologisch abbaubare Weichmacher enthaltenden Polyvinylacetat-Imprägnierungen verwendet werden, wobei als Weichmacher Triester des Glycerins mit niederen aliphatischen Monocarbonsäuren mit 2 bis 4 C-Atomen, Citronensäuretriester mit niederen aliphatischen monofunktionellen Alkoholen und/oder epoxidierte Triglyceride wenigstens anteilsweise olefinisch ungesättigter Fettsäuren zum Einsatz kommen.

3. Verwendung nach Ansprüchen 1 und 2, dadurch gekennzeichnet, daß als Stabilisatoren wenigstens anteilsweise Salze des Calciums und/oder Aluminiums von gesättigten und/oder olefinisch 1- und/oder mehrfach ungesättigten Fettsäuren verwendet werden.

4. Verwendung nach Ansprüchen 1 bis 3, dadurch gekennzeichnet, daß die Stabilisatoren in Abmischung mit der Imprägniermasse auf Polyvinylester-Basis und/oder im Anschluß an eine vorgängige Erdreichstabilisierung mit der Polyvinylesterbasierten Imprägnierung aufgetragen werden.

5. Verwendung nach Ansprüchen 1 bis 4, dadurch gekennzeichnet. daß auch die Stabilisatoren in Form wäßriger Dispersionen und/oder Emulsionen eingesetzt und in das Erdreich eingetragen werden.

6. Verwendung nach Ansprüchen 1 bis 5, dadurch gekennzeichnet, daß wenigstens beim Einsatz von Stabilisatoren, die im Temperaturbereich von 5 bis 15°C als Feststoffe vorliegen, organische Fließhilfsmittel mitverwendet werden.

7. Verwendung nach Ansprüchen 1 bis 6, dadurch gekennzeichnet, daß als Fließhilfsmittel im Temperaturbereich von 5 bis 15°C fließfähige Komponenten auf Basis Alkohole, Ether und/oder Carbonsäureester verwendet werden.

8. Verwendung nach Ansprüchen 1 bis 7, dadurch gekennzeichnet, daß als Ester-basierte Stabilisatoren Voll- und/oder Partialester von wenigstens anteilsweise olefinisch ungesättigten Fettsäuren mit Alkoholen mit 2 bis 6 Hydroxylgruppen und bis zu 6 C-Atomen verwendet werden.

9. Verwendung nach Ansprüchen 1 bis 7, dadurch gekennzeichnet, daß als Ester-basierte Stabilisatoren Polyester vom Typ der Alkydharze, mit Fettsäureresten veresterte Polyvinylalkohol-Oligomere und -Polymere bzw. mit gegebenenfalls olefinisch ungesättigten Fettalkoholresten veresterte (Meth)acrylatoligomere verwendet werden.

10. Verwendung nach Ansprüchen 1 bis 9, dadurch gekennzeichnet, daß als Fettsäuren/Fettalkohole bzw. deren Reste entsprechende Komponenten mit 6 bis 30 C-Atomen im Molekül verwendet werden.

11. Verwendung nach Ansprüchen 1 bis 10, dadurch gekennzeichnet, daß Naturstoffbasierte Fettsäuren bzw. Fettalkohole oder deren Ester. Ether bzw. Salze verwendet werden.

12. Verwendung nach Ansprüchen 1 bis 11, dadurch gekennzeichnet. daß Imprägniermittel auf Basis Polyvinylacetat und/oder -Propionat und/oder auf Basis von Copolymeren dieser niederen Vinylester mit Vinylestern höherer Fettsäuren, verwendet werden, wobei die Vinylester der höheren Fettsäuren in untergeordneten Mengen in Copolymeren vorliegen.

13. Verwendung nach Ansprüchen 1 bis 12, dadurch gekennzeichnet, daß die Polyvinylester-basierten Imprägniermittel und die Stabilisatoren auf Basis von Fettresten in Mengenverhältnissen (wasserfreie Wertstoffe) von 5 : 1 bis 1 : 5 eingesetzt werden.

14. Verwendung nach Ansprüchen 1 bis 13, dadurch gekennzeichnet, daß Stabilisatoren bzw. deren Abmischungen mit filmbildenden Hilfsmitteln eingesetzt werden, deren Mindest-Filmbildungstemperatur im Bereich von 0 bis 15°C liegt.

15. Verwendung nach Ansprüchen 1 bis 14, dadurch gekennzeichnet, daß die Imprägniermittel auf Polyvinylester-Basis und die Stabilisatoren jeweils in Mengen von wenigstens 50 g/m² Bodenfläche bis 250 g/m² Bodenfläche, aufgetragen werden.

16. Verwendung nach Ansprüchen 1 bis 15, dadurch gekennzeichnet, daß vor und/oder zusammen mit den Hilfsmitteln zur Bodenverfestigung Pflanzensamen in das Erdreich eingebracht werden.

## Claims

1. The use of at least partly mono- and/or polyolefinically unsaturated fatty acids, fatty alcohols and/or at least substantially water-insoluble esters, ethers and/or salts thereof as degradable and biologically safe stabilizers for increasing the water resistance of soil impregnations based on esters of polyvinyl alcohol with C₁₋₅ monocarboxylic acids and mixtures thereof with small quantities of higher monocarboxylic acids.

2. The use claimed in claim 1, characterized in that the stabilizers are used together with polyvinyl acetate impregnations containing biologically degradable plasticizers, preferred plasticizers being triesters of glycerol with lower aliphatic monocarboxylic acids containing 2 to 4 carbon atoms, citric acid triesters with lower aliphatic monohydric alcohols and/or epoxidized triglycerides of at least partly olefinically unsaturated fatty acids.

3. The use claimed in claims 1 and 2, characterized in that salts of calcium and/or aluminium of saturated and/or monoolefinically and/or polyolefinically unsaturated fatty acids are at least partly used as the stabilizers.

4. The use claimed in claims 1 to 3, characterized in that the stabilizers are applied in admixture with the impregnating composition based on polyvinyl esters and/or after preliminary soil stabilization with the polyvinyl-ester-based impregnation.

5. The use claimed in claims 1 to 4, characterized in that the stabilizers also are used in the form of aqueous dispersions and/or emulsions and are introduced into the soil as such.

6. The use claimed in claims 1 to 5, characterized in that, at least where stabilizers present as solids at temperatures of 5 to 15°C are used, organic flow aids are also used.

7. The use claimed in claims 1 to 6, characterized in that components based on alcohols, ethers and/or carboxylic acid esters which flow at temperatures of 5 to 15°C are used as the flow aids.

8. The use claimed in claims 1 to 7, characterized in that full and/or partial esters of at least partly olefinically unsaturated fatty acids with alcohols containing 2 to 6 hydroxyl groups and up to 6 carbon atoms are used as ester-based stabilizers.

9. The use claimed in claims 1 to 7, characterized in that polyesters of the alkyd resin type, polyvinyl alcohol oligomers and polymers esterified with fatty acid residues or (meth)acrylate oligomers esterified with optionally olefinically unsaturated fatty alcohol residues are used as the ester-based stabilizers.

10. The use claimed in claims 1 to 9, characterized in that the fatty acids/fatty alcohols or residues thereof used are corresponding components containing 6 to 30 carbon atoms in the molecule.

11. The use claimed in claims 1 to 10, characterized in that fatty acids or fatty alcohols based on natural materials or esters, ethers or salts thereof are used.

12. The use claimed in claims 1 to 11, characterized in that impregnating compositions based on polyvinyl acetate and/or propionate and/or on copolymers of these lower vinyl esters with vinyl esters of higher fatty acids are used, the vinyl esters of the higher fatty acids preferably being present in small quantities in copolymers.

13. The use claimed in claims 1 to 12, characterized in that the polyvinyl-ester-based impregnating compositions and the stabilizers based on fatty residues are used in quantity ratios (water-free useful materials) of 5:1 to 1:5.

14. The use claimed in claims 1 to 13, characterized in that stabilizers or mixtures thereof with film-forming auxiliaries having a minimum film-forming temperature of 0 to 15°C are used.

15. The use claimed in claims 1 to 14, characterized in that the polyvinyl-ester-based impregnating compositions and the stabilizers are each applied in quantities of at least 50 g/m² to 250 g/m² of soil area to be treated.

16. The use claimed in claims 1 to 15, characterized in that plant seeds are introduced into the soil before and/or together with the soil-stabilizing auxiliaries.

## Revendications

1. Utilisation d'acides gras à mono- ou à polyinsaturation oléfinique au moins partielle, d'alcools gras et/ou de leurs esters au moins largement insolubles dans l'eau, d'éthers et/ou de sels, comme stabilisants dégradables et biocompatibles, pour accroître la résistance à l'eau d'imprégnations du sol à base d'esters de l'alcool polyvinylique avec des acides monocarboxyliques en C₁₋₅ et des mélanges de ceux-ci avec des quantités secondaires d'acides monocarboxyliques supérieurs.

2. Utilisation selon la revendication 1, caractérisée en ce que les stabilisants sont mis en oeuvre conjointement avec des imprégnations d'acétate de polyvinyle renfermant des plastifiants biodégradables, auquel cas sont utilisés comme plastifiants, des triesters de glycérine avec des acides monocarboxyliques aliphatiques inférieurs comportant 2 à 4 atomes de C, des triesters de l'acide citrique avec des alcools monofonctionnels aliphatiques inférieurs et/ou des triglycérides époxydés d'acides gras à insaturation oléfinique au moins partielle.

3. Utilisation selon les revendications 1 et 2, caractérisée en ce que l'on met en oeuvre comme stabilisants, au moins en partie des sels de calcium et/ou d'aluminium d'acides gras saturés et/ou à insaturation mono- et/ou polyoléfinique.

4. Utilisation selon les revendications 1 à 3, caractérisée en ce que les stabilisants sont appliqués en mélange avec la masse d'imprégnation à base d'ester de polyvinyle et/ou à la suite d'une stabilisation préalable du sol avec l'imprégnation à base d'ester de polyvinyle.

5. Utilisation selon les revendications 1 à 4, caractérisée en ce que les stabilisants sont également mis en oeuvre sous forme de dispersions et/ou d'émulsions aqueuses, et incorporés dans le sol.

6. Utilisation selon les revendications 1 à 5, caractérisée en ce qu'au moins en cas de mise en oeuvre de stabilisants, qui sont présents comme matières solides dans l'intervalle de températures de 5 à 15 °C, des adjuvants d'écoulement organiques sont co-utilisés.

7. Utilisation selon les revendications 1 à 6, caractérisée en ce que l'on met en oeuvre comme adjuvants d'écoulement dans l'intervalle de température de 5 à 15 °C, des composants coulants à base d'alcools, d'éthers et/ou d'esters d'acides carboxyliques.

8. Utilisation selon les revendications 1 à 7, caractérisée en ce que l'on met en oeuvre comme stabilisants à base d'esters. des esters complets et/ou partiels d'acides gras à insaturation oléfinique au moins partielle avec des alcools comportant 2 à 6 groupes hydroxyle et jusqu'à 6 atomes de C.

9. Utilisation selon les revendications 1 à 7, caractérisée en ce que l'on met en oeuvre comme stabilisants à base d'esters, des polyesters du type des résines alkydes, des oligo- et des polymères d'alcool polyvinylique estérifiés avec des radicaux d'acides gras ou des oligomères de (méth)acrylate estérifiés avec des radicaux d'alcools gras le cas échéant à insaturation oléfinique.

10. Utilisation selon les revendications 1 à 9, caractérisée en ce que l'on met en oeuvre comme alcools gras/acides gras ou radicaux de ceux-ci, des composants correspondants dont la molécule comporte 6 a 30 atomes de C.

11. Utilisation selon les revendications 1 à 10, caractérisée en ce que l'on met en oeuvre des acides gras ou des alcools gras à base de substances naturelles ou des esters, des éthers ou des sels de ceux-ci.

12. Utilisation selon les revendications 1 à 11, caractérisée en ce que l'on met en oeuvre des agents d'imprégnation à base d'acétate et/ou de propionate de polyvinyle et/ou à base de copolymères de ces esters vinyliques inférieurs avec des esters vinyliques d'acides gras supérieurs, les esters vinyliques des acides gras supérieurs étant présents dans les copolymères en quantités secondaires.

13. Utilisation selon les revendications 1 à 12, caractérisée en ce que l'on met en oeuvre les agents d'imprégnation à base d'esters de polyvinyle et les stabilisants à base de radicaux gras en proportions quantitatives (matières anhydres) de 5:1 à 1:5.

14. Utilisation selon les revendications 1 à 13, caractérisée en ce que les stabilisants ou leurs mélanges sont mis en oeuvre avec des adjuvants filmogènes, dont la température de formation de film minimale se situe dans la plage de 0 à 15 °C.

15. Utilisation selon les revendications 1 à 14, caractérisée en ce que les agents d'imprégnation à base d'ester de polyvinyle et les stabilisants sont appliqués chacun en proportions d'au moins 50 à 250 g/m² de surface de sol.

16. Utilisation selon les revendications 1 à 15, caractérisée en ce que des semences de plantes sont incorporées dans le sol, avant et/ou conjointement avec les adjuvants pour la consolidation du sol.
